# EUROPEAN PATENT APPLICATION

(11) **EP 4 800 977 A1**
(43) Date of publication of application: **02.09.2026**
(21) Application number: 23956705.0
(22) Date of filing: 23.10.2023
(51) Int. Cl.: H04L 9/40

(54) **TRAFFIC ANALYSIS METHOD FOR DETECTING CYBERTHREATS VIA LOCALISATION OF LURES**

(71) Applicant: Telefonica Cibersecurity & Cloud Tech S.L.U., 28050 Madrid (ES)
(72) Inventor: ÁLVAREZ CORRADA, Gabriel, 28050 Madrid (ES); TORRES VELASCO, José, 28050 Madrid (ES); VIDAL GONZÁLEZ, Sergio, 28050 Madrid (ES)
(74) Representative: Herrero & Asociados, S.L.
(86) International application number: PCT/ES2023/070621
(87) International publication number: WO 2025/088224

(57) **Abstract**

A method for detecting cyber threats using a plurality of decoys managed by a traffic analysis and predictive cyber threat intelligence platform. Each decoy is associated with a virtual private server (VPS) tunneled to the platform via VPN and with an identifier stored on the platform. The method generates a packet hash and dissects the header and payload information, determining whether the packet is received via a virtual private network, VPN, connection or directly from the internet, by analyzing the time-to-live and identifier values contained in the network header. These values allow for the identification of the associated VPS and its origin, improving cyber threat detection. If the connection is via VPN, the packet identifier is compared to the stored VPS identifiers. If there is a match, the packet is tagged with the corresponding identifier, allowing the platform to analyze the packet with additional information.

## Description

### OBJECT OF THE INVENTION

The present invention falls within the technical field of cyber threat capture systems, honeypots.

In particular, the present invention relates to a traffic analysis method for detecting cyber threats by identifying and locating decoys, applicable in a Cyber Threat Intelligence system.

### BACKGROUND OF THE INVENTION

Information on cyber threats targeting industrial sectors is scarce and of poor quality. This is because software systems running on personal computers (PCs) are used to virtualize industrial hardware, which typically generates more information about the PCs themselves than about the virtualized industrial systems. Furthermore, virtualized systems are comparable to low-iteration honeypots, so they are not operable by the attacker and much of their tactics, techniques, procedures, tools... are lost.

There are solutions that provide the modification of IP (Internet Protocol) headers for different uses, mostly by modifying the time to live or TTL, but none of them refer to modifying two parameters of the headers: time to live TTL and ID identifier of the datagram. Furthermore, none of the existing solutions use these parameters (TTL, ID) to identify virtual private server (VPS) connections, nor can they geolocate them.

On the other hand, deploying the same decoy in several geographical locations through VPS services offers a key advantage, resulting in two performance improvements:
- The key advantage is the ability to increase the attack surface, thereby receiving more information about cyber threats. This results in increased efficiency and effectiveness, as outlined below.
- Increase the efficiency of the system, since the assembly, deployment and maintenance of the decoy has a cost that is amortized sooner by exposing the same decoy in different locations.
- Increase the effectiveness of the threat capture system, since a larger attack surface and the ability to logically place the exact same decoy in different locations allows for the simultaneous capture and analysis of cyber threat activity. This enables a better understanding of common threats and the discovery of others located in specific parts of the world. It also enhances Cyber Threat Intelligence processes with more data, allowing for the anticipation of cybercriminals' movements, such as trends or targeted attacks against specific companies, nations, or industrial sectors.

However, this tactic also presents several problems. Capturing data through the same decoy from different locations identifies the source of the event on the system (the attacker), but not the sender capturing the information (the VPS). Therefore, crucial geolocation information for the decoy is lost, resulting in a loss of traceability, visibility, and the ability to analyze the information and generate Cyber Threat Intelligence.

This situation is even more problematic if the same decoy is deployed across multiple VPSs with direct internet connections, as it becomes impossible to identify which VPS is collecting the captured information, thus eliminating the possibility of comparative analysis. In the normal operation of a threat capture system that attempts to leverage VPS infrastructure to provide multiple outputs from which to increase its threat exposure and capture rate, the problem is that the VPS data is masked by the source IP data. For this reason, the sending VPS cannot be identified, and all location reference information is lost. The information therefore lacks valuable context and does not allow for in-depth threat analysis.

Therefore, the objective technical problem presented is to provide a mechanism to both identify and locate honeypots, leveraging their location to enhance the intelligence generated by a threat analysis and prediction platform.

### DESCRIPTION OF THE INVENTION

The present invention serves to solve the aforementioned problem by simultaneously exposing a decoy for capturing threats across multiple locations and identifying the source by modifying the IP headers of the generated traffic.

One aspect of the invention relates to a computer-implemented method of traffic analysis for detecting cyber threats, as defined in claim 1. Dependent claims define advantageous embodiments.

Another aspect of the invention relates to a data processing apparatus comprising at least one processor configured to perform the steps of the method defined above.

Another aspect of the invention relates to a computer program product comprising instructions that, when the program is executed by a computer, cause it to perform the method defined above.

Another aspect of the invention relates to a computer-readable medium comprising instructions that, when executed by the computer, cause it to perform the method defined above.

The advantages of the present invention over the prior art are fundamentally:
- The system is designed to identify the logical outputs (virtual private servers, VPSs) that can connect to the same decoy for threat detection. In addition to identifying the connection type, it allows for the geolocation of each VPS, providing extra information that can be used by a threat analysis and predictive intelligence platform, including platforms that deploy decoys with real industrial hardware, maximizing the investment in each decoy since, by exposing the same decoy in different locations, costs are saved.
- The present invention strengthens cybersecurity and adds valuable information for executing processes of converting data into intelligence on computer threats to prevent attacks: Cyber Threat Intelligence or CTI.

These and other advantages can be derived from the detailed description of the invention presented below.

### DESCRIPTION OF THE DRAWINGS

To complement the description being made and to aid in a better understanding of the characteristics of the invention, according to a preferred embodiment thereof, a set of drawings is included as an integral part of said description, in which, for illustrative and non-limiting purposes, the following has been represented:
Figure 1 shows a schematic of the OSI model layers and the data structure of each layer as known in the prior art.
Figure 2 shows a block diagram of the actions performed on decoy connections with the traffic analysis and predictive cyber threat intelligence platform, according to a possible embodiment of the invention.
Figure 3 shows a flowchart of the steps performed by the traffic analysis and predictive cyber threat intelligence platform, according to a possible embodiment of the invention.
Figure 4 shows a flowchart of the steps performed by the platform for traffic dissection and VPS information search by platform.
Figure 5 shows a complete schematic of the interaction of internet connection and decoy traffic with the platform functionalities.

### PREFERRED EMBODIMENT OF THE INVENTION

A detailed explanation of an example of a preferred embodiment of the object of the present invention is then provided with the help of the figures referred to above.

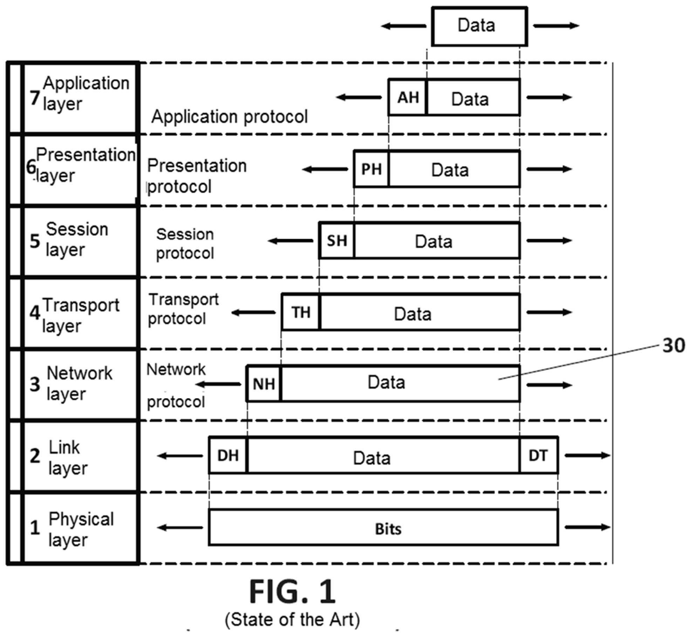

To identify the type of connection, whether it is a VPS (Virtual Private Server) or a direct internet connection, and to identify the specific Virtual Private Server, VPS, where the interaction with the decoy is recorded, several tasks are performed to improve information traceability and identify the sender. The tasks performed for each connection between a VPS and its associated decoy are as follows:
- Two fields in all IP headers sent by each VPS to the decoy are modified. These headers contain extra information placed at the beginning of data transmission over a network. Their purpose is to communicate essential information for the correct processing of subsequent data. The two parameters modified are: the Time to Live (TTL) and the Identifier (ID) of the datagrams, which are described below.
- Due to the interaction of various actors against systems exposed to threats, network traffic is generated that adheres to all the standards of the Open Systems Interconnection (OSI) model. This OSI model consists of seven layers: **1**, **2**, **3**, **4**, **5**, **6**, **7**, as shown in Figure 1. Each layer has its own functions and enables intercommunication between different protocols. Specifically, the proposed modification to the frame headers focuses on Layer **3**, or the network layer, which is responsible for logical addressing and the routing domain. Furthermore, this layer is present in all communications involving an external actor, making it the lowest appropriate layer for modification. Within Layer **3**, the network layer, there is a Network Header **NH** and a payload, which contains the encapsulated information from all the higher layers (Layers 4-7). Two parameters within the header **NH** are modified:
   ∘ The Time to Live (TTL) which determines the number of hops through the nodes of a network that a packet with information can pass before being discarded by the network. Each step or hop through one of these nodes subtracts that value by one unit. When the TTL reaches zero, the packet (or the subpackets that compose it) must have reached its destination or it will be discarded or returned.
   ∘ The ID identifier of the datagrams to be sent over the network. This field consists of 16 bits and is used as a unique identifier for the datagram being sent over the network. In this way, if a datagram is too long (and is sent in several fragments), the fragments are identifiable and the information is transmitted completely when they are reassembled.
      ▪ When a datagram is going to be fragmented, this is indicated in the header itself. Therefore, it is easily verifiable.
- Furthermore, a tunnel, implemented via a virtual private network (VPN), is established between each VPS and the referenced decoy. This helps prevent changes to the TTL once the value has been preset.
- To ensure traceability of these network changes and configurations, a hash is generated for each network packet, produced by a cryptographic hash function, and the packet is dissected, generating two analysis flows:
   ∘ On one hand, the modified information in the IP header is analyzed to assign it to a specific VPS, if applicable.
   ∘ On the other hand, the traffic analysis process continues to process it and execute the "Threat Intelligence" tasks defined in a threat analysis and predictive intelligence platform.

These tasks, therefore, require action on three distinct points of the structure of the aforementioned intelligent platform:
i. Regarding the VPS(s) that serve(s) as logical outputs for the platform's decoys.
ii. Regarding the network configuration for connecting the VPS(s) to the decoy it represents.
iii. Regarding the platform's analytics system. Specifically, regarding the traffic processing component and adding the VPS identification component.

### i) Action taken regarding the VPS:

The actions taken regarding the VPS are as follows:
- A VPS is deployed with a UNIX operating system (the distribution is irrelevant).
- The input and output interfaces are configured, receiving their IP addresses via the Dynamic Host Configuration Protocol (DHCP).
   a. The VPN tunnel associated with these interfaces is configured.
- With administrator/root privileges on the system, a script is executed that performs several steps
   a. An ID is assigned to each VPS. This ID will be included in each IP header of the data to be sent. Additionally, this ID is stored in a table within the intelligence platform that receives all the information. The IDs stored in the table are compared with the IDs in the incoming data, revealing the exact location of each VPS.
   b. The kernel is modified to prefix the value of the ID and TTL fields of the IP headers at the network level.
      i. The TTL value for each VPS is set to 255, as per an example implementation. TTL=255 when the traffic reaches the intelligent platform. Although very unlikely, this value can be found in traffic captured by a decoy directly connecting to the internet. For this reason, the ID field serves as a second verification factor, to confirm that the traffic originates from a VPS and which VPS it is.
      ii. The value defined for the ID field in each VPS is arbitrarily determined by the team managing the intelligent platform and is stored in a table within the platform's traffic processing system to identify the source VPS. This change means the original purpose of this field is lost, but after several tests, no packet loss was observed on the system. In any case, it has been estimated that the loss of a minimal number of packets out of all those generated does not significantly reduce the quantity or quality of the input data. Therefore, it also does not negatively impact the performance of the rest of the solution.
   c. A network filter hook ("netfilter hook") is created, where "Netfilter" is simply a series of hooks at various points in a protocol stack to capture and process generated packets. The function of this element is to analyze all packets and perform various actions:
      i. Check if the VPS has an assigned ID.
      ii. Check if the header indicates packet fragmentation.
         1. If positive, the package is discarded.
         2. If negative, the TTL is set to 255 and the ID that has been defined for the VPS is assigned. A checksum is calculated for the packet, and normal transmission continues through the previously created interfaces.
- After completing the installation, the machine installed on the VPS is restarted for the changes to take effect and become permanent.

### ii) Action on the network configuration for the VPS-decoy connection:

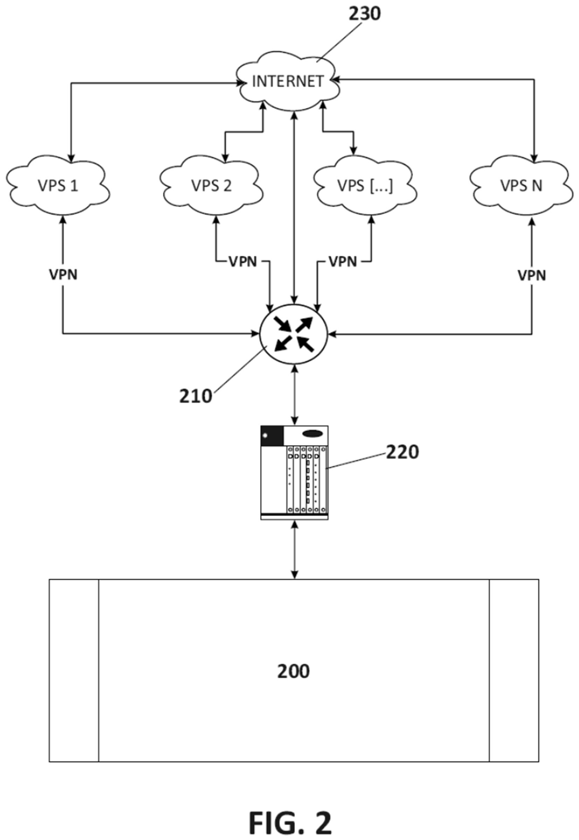

To stabilize the connection between the VPSs and the traffic analysis system, the connection is tunneled using a VPN connection, as described in step i) above, leaving the configuration, therefore, as shown in Figure 2, as follows: A plurality of N virtual private server connections, **VPS₁**, **VPS_{2,}** ..., **VPS_{N}**, each connected through its corresponding **VPN** tunnel, has an associated decoy. A network element **210**, which can be an internet service provider (ISP) modem-router or the ISP's modem in bridge mode, connects the plurality of VPSs through a separate router **220** for each node to run the functions required by the cyber threat intelligence platform **200**. The connection between the VPSs and the platform's traffic analysis system **200** applies an extra layer of security to the communication between the cyber threat intelligence platform **200** and each VPS. Furthermore, it allows for stable modification of the TTL value, as it controls the number of hops until reaching the traffic capture and analysis system of platform **200.**

### iii) Action on the traffic processing system of the cyber threat intelligence platform 200:

In a situation where there is only one direct Internet connection **230**, traffic processing will be typical of data capture and analysis systems. The traffic is processed, extracting information and then undergoing transformation (into other types of information) or analysis.

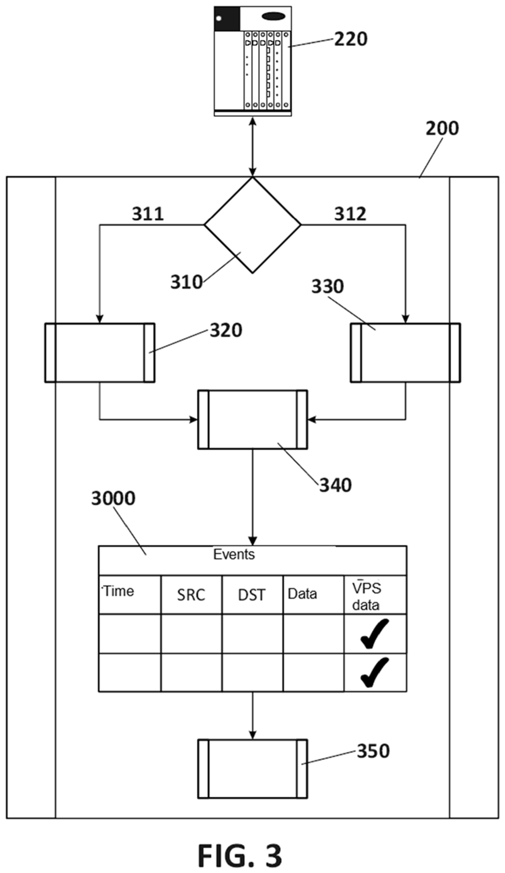

However, including other logical exits involves dissecting incoming traffic to find parameters that might indicate a packet originating from a VPS. The process is shown in Figure 3 and is as follows:
- When performing traffic dissection **310**, two subtasks are executed:
   1.1. A hash of incoming traffic is calculated **311** using the SHA1 hash function to identify what information should later be identified as coming from a VPS and from which VPS. Each part of the process implicitly includes this hash, to make that identification later if necessary.
      1.1.1. The hash generation is carried out by mixing the following elements:
         1.1.1.1. The source IP address
         1.1.1.2. The port of origin from which the communication was sent
         1.1.1.3. The destination IP address
         1.1.1.4. The port of origin from which the communication arrived
         1.1.1.5. The version of the hash generation protocol
         1.1.1.6. An incremental integer, of 16 bits, used to provide a time value to the hash (hash generation time).
   1.2. The IP header, which includes the TTL and ID, is searched for, and information that may be modified is extracted **312** to integrate it into the decision and identification process of the VPS **330**. The rest of the information is processed and stored, such as event information associated with a time, source address and port **SRC**, destination address and port **DST**, data, and VPS data, in a table **3000** of a database on the platform **200**.
- Once the dissection is complete, the IP header is analyzed to see if the TTL value fits within those specified for a VPN connection.
   2.1. If the TTL value does not match, the system infers that the information is coming from the direct Internet connection **230** and manages the traffic following the information curation and traffic analysis processes that run in parallel on platform **200**.
   2.2. If the TTL value matches, the IP header ID is compared with the one stored internally in table **3000** to identify which VPS is the sender of that information.
      2.2.1. If the ID value does not match any of those stored internally, the traffic is treated as if it came from the direct Internet connection **230**, since it may be a false positive.
      2.2.2. If the ID value matches one of those stored internally, the system uses the hash to search for the other piece of information in table **3000** of the database, where the information curation begins and a label is added with the identification of the specific VPS that sent that traffic and, therefore, its location.
- After the dissection has been carried out, the curation of the rest of the information begins for analysis or correlation **340**.

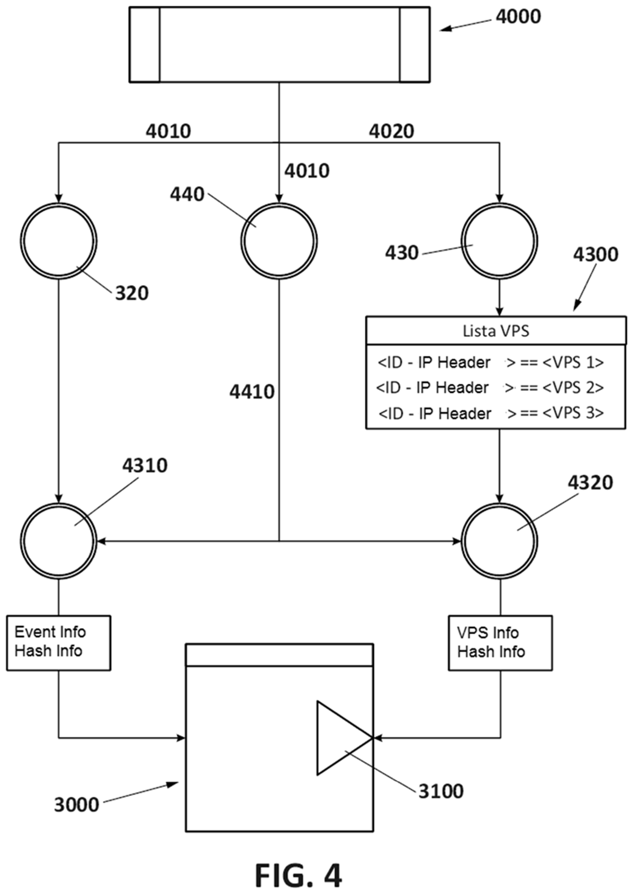

Figure 4 is introduced to clarify the process described above, which leads to the identification and location of the VPS sending network packet **4000**. The data portion **4010** of network packet **4000** is passed to the initial traffic analysis module **320** and the hash calculation module **440**, while the header **4020** of network packet **4000** is passed to the previously described analysis **430** of the ID and TTL values of network packet **4000**. Using the VPS listing table **4300**, the ID of the incoming network packet **4000** is compared with the list of stored IDs corresponding to VPSs. If there is a match, the information for VPS **4200** is obtained, which is used to identify and subsequently locate the VPS found in the VPS listing table **4300**. On the other hand, the complete **4310** event information, which contains the information extracted as a result of initial traffic analysis **320** and the hash information **4410**, is stored in table **3000**, in which the search for hash **3100** described above is performed for the VPS information set **4320** which also carries hash information **4410.**

3.1. If correlation **340** determines that the traffic did not originate from a VPS, the information is added to a database and further processing and analysis **350**. No additional information is added.

3.2. If correlation **340** determines that the traffic came from a VPS, the VPS identification process **330** looks for the piece of information with the same hash that was calculated **311** and recorded during traffic dissection **310** and adds the VPS identification to the information loaded into the database, as indicated in point 2.2.2.

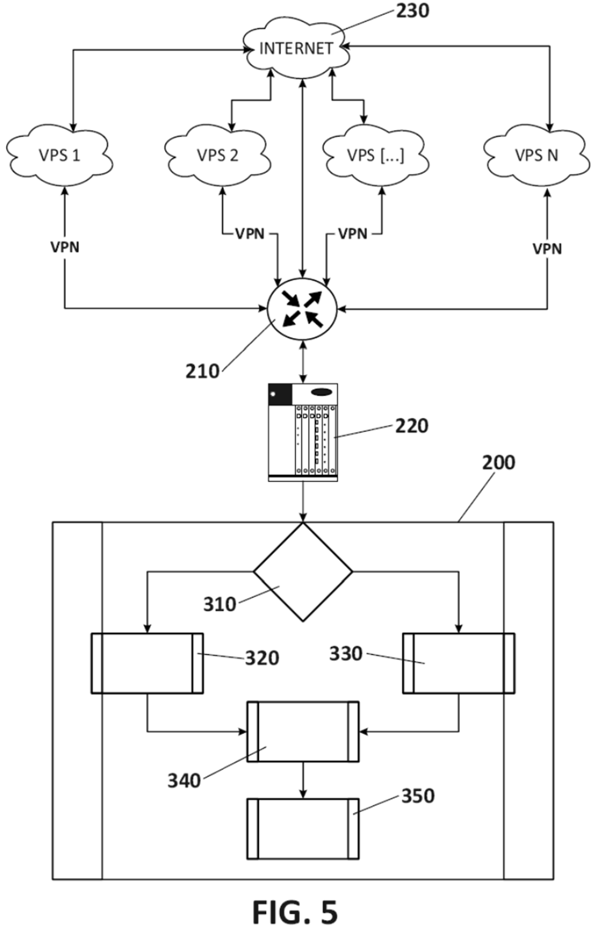

The complete process is shown in Figure 5. Using two fields within the IP header helps minimize potential collisions with TTL values similar to the one defined for VPS connections. This is something that can happen, albeit remotely. However, if the ID field is not found in the internally stored list, it is understood that the actual sender of this information is the decoy's direct connection and not a VPS, so no VPS information is added to that trace. Regarding the ID value, although statistically a packet from the direct connection between one of the decoys on platform **200** and Internet **230** might have the same ID value as one of those registered in the system, the TTL value also serves to identify that it is not a connection to a VPS. The low probability of a match occurring with the TTL and the ID separately makes using both values together even more difficult, reducing the likelihood of collisions and false positives when identifying a VPS. Furthermore, the fact that the ID field value is arbitrarily assigned by a human operator reduces entropy and, therefore, the possibility of both data points colliding simultaneously within the same packet.

Currently, the VPS ID is generated by a human who reviews the list of registered VPSs and their corresponding IDs and assigns one that is not on that list. However, another possible implementation would be the following:
- The UNIX distribution used can be modified so that the changes are already persisted in the system and the ID value is automatically loaded upon connecting to the intelligent platform. Thus, the platform generates a unique ID that does not conflict with those already registered for the other deployed VPSs. Aristeo, the platform can give an OK when it receives the first correct data from the VPS.
   ∘ This modification ensures that there are no collisions between VPSs deployed due to failure to review the list by the person responsible for generating the ID.
   ∘ This modification also means less time is needed to deploy the solution, because it is automatic and also provides extra confirmation that it has been deployed correctly when an OK is received from the intelligent platform.

## Claims

1. A computer-implemented method of traffic analysis for detecting cyber threats that uses a plurality of decoys deployed in multiple locations managed through a traffic analysis platform that receives network packets, with a network header and payload, wherein each decoy is associated with a virtual private server, VPS, having a VPS identifier stored on the platform and the VPS being connected to the platform through a virtual private network tunnel, **characterized in that** the method comprises the following steps executed by one or more processors for each received packet:
- applying a hash function to generate a hash of the packet and, using the generated hash, dissecting the packet into network header information of the packet and payload information, wherein the header information comprises a packet time-to-live (TTL) value and a packet identifier value;
- determining, based on the time to live value, whether the packet is received via a virtual private network connection or a direct Internet connection, and
- if it is a virtual private network connection, comparing the packet identifier value with each VPS identifier from among a plurality of VPS identifiers that are stored on the platform and associated with the decoys, and
- if the packet identifier value does not match any of the stored VPS identifiers or is determined, based on the time to live value of the packet received by direct connection to the Internet, the platform analyzes the packet without any added information,
- if it is a virtual private network connection and the packet identifier value matches any of the stored VPS identifiers, tagging the payload information whose hash is the same as the hash of the packet identifier value with the matching VPS identifier, the platform analyzes the packet with added information, which is the tag with the VPS identifier.

2. The method according to claim 1, wherein each VPS identifier stored on the platform is previously, during the deployment of the plurality of decoys, assigned by a human operator or by the intelligent platform.

3. The method according to claim 2, wherein each assigned VPS identifier is fixed in the network header of each packet to be sent through the corresponding virtual private network tunnel and in said network header a VPS TTL value of 255 is fixed.

4. The method according to any of the preceding claims, wherein the hash of each packet received on the platform is generated by applying the SHA1 hash function and a set of parameters comprising a source and destination IP address of the packet, a source port and destination port of the packet, a version number of the hash function, and an incremental integer indicating a hash generation time.

5. A computer program product comprising instructions that, when the program is executed by a computer, cause the computer to carry out the method of claims 1-4.

6. A computer-readable medium comprising instructions that, when executed by a computer, cause the computer to carry out the method of claims 1-4.
